# EUROPEAN PATENT SPECIFICATION

(11) **EP 3 126 922 B1**
(45) Date of publication and mention of the grant of the patent: **02.06.2021**
(21) Application number: 15774004.4
(22) Date of filing: 02.04.2015
(51) Int. Cl.: H02J 7/00, G05D 7/06, G05D 11/02, H02P 13/00, H01H 47/22

(54) **BATTERY MANAGEMENT SYSTEM AND METHOD AND BATTERY POWERED APPLIANCE INCORPORATING THE SAME**
BATTERIEVERWALTUNGSSYSTEM UND VERFAHREN UND BATTERIEBETRIEBENES GERÄT DAMIT
SYSTÈME ET PROCÉDÉ DE GESTION DE BATTERIE ET APPAREIL ALIMENTÉ PAR BATTERIE LES COMPRENANT

(30) Priority: 02.04.2014 AU 2014901200
(43) Date of publication of application: 08.02.2017
(73) Proprietor: Bookleaf Pty Ltd, Osborne Park, Western Australia 6017 (AU)
(72) Inventor: EDWARDS, Walter John, Floreat, Western Australia 6014 (AU); WOOD, Michael Barrington, Mt Lawley, Western Australia 6050 (AU)
(74) Representative: Cohausz & Florack
(86) International application number: PCT/AU2015/050152
(87) International publication number: WO 2015/149134

(56) References cited:
- WO-A1-98/58270
- US-A- 5 912 544
- US-A1- 2008 058 995
- US-A1- 2008 058 995
- US-A1- 2011 309 839
- US-A1- 2013 154 579

## Description

### Technical Field

This invention relates to power supplies for electronic and electrical appliances, and in particular a system and method of managing operation of a battery powered appliance.

### Background Art

The following discussion of the background art is intended to facilitate an understanding of the present invention only. It should be appreciated that the discussion is not an acknowledgement or admission that any of the material referred to was part of the common general knowledge as at the priority date of the application.

There are some applications for electrical and electronic appliances where battery power from batteries is utilised, usually where deriving a power supply from mains electricity or other relatively inexhaustible supply is inconvenient or impossible. Typically the batteries are self contained with the appliance. The batteries may be primary cells or can be secondary cells (rechargeable) associated with a small solar cell, also co-located with the appliance.

An example of an appliance of the type discussed above is a tap timer (or faucet timer) for controlling water flow to garden sprinklers or drippers for irrigating a garden bed or pot plants. Such a tap timer is fitted to a garden tap, the garden tap then being left with its hand operated valve in the open position. The tap timer can be programmed with a timetable to open and close an internal electrically operated valve within the tap timer, in order to supply water for a predetermined time, at predetermined times or intervals, to achieve the garden watering. The typical intervals may be once a day on predetermined days as may be dictated by regulatory authorities, once every second day, once a day, or several times per day, commencing at predetermined times, as programmed by the user.

A problem with these tap timers is that should the battery have insufficient voltage or remaining capacity, the irrigation will not take place. This is unfortunate for the owner as the consequence will be the loss of plants in the garden or pots.

However a problem of more dire consequence is where after watering has commenced, and the operation of the tap timer has resulted in the battery having insufficient voltage or remaining capacity. In these circumstances, the tap timer can fail to operate to turn off the electrically operated valve. The consequence of this is that at the very least, water will be wasted.

It will be understood that if the electrically actuated/operated valve was a solenoid valve of the type where power must be maintained on to maintain the valve open, this would not be a problem, but for reasons of conserving battery power to maximise battery life in the tap timer, the valve is electrically actuated, requiring application of power to open the electrically operated valve and subsequently also requiring application of power to close the electrically operated valve. Such valves where power is required to open and again to close the valve can include rotary driven actuators that are driven in one direction to open the valve and driven in the other direction to close the valve, and latching solenoid valves which on application of current in one direction open the valve and use a magnet to latch the valve open and require delivery of current in the opposite direction to unlatch the mechanism which results in closing of the valve.

To some extent, the failure problem has been addressed by including in the tap timer a voltage set point, where if the battery voltage falls below a predetermined level, the internal circuitry is arranged to not operate the electrically operated valve to the open position, so watering will not commence. It is usually up to the owner of the tap timer to monitor the battery voltage, and replace the batteries before they reach such a discharged state that the voltage set point is reached.

However, different batteries have different characteristics, and a single voltage set point will not be suitable for different types of battery. A voltage set point that is safe for a zinc manganese dry cell would likely result in an alkaline dry cell being replaced before the end of its useful service life, and a voltage set point that is suitable for an alkaline dry cell could result in equipment failure as described above, when a zinc manganese dry cell is used.

US patent application US 2013/154579 A1 discloses a capacitor device including a capacitor unit, a voltage-dividing circuit for outputting a divided voltage obtained by dividing a voltage of the capacitor unit, and a comparator circuit. The comparator circuit causes the charge circuit to operate such that the voltage of the capacitor unit reaches a full-charge voltage. The voltage-dividing circuit includes a semiconductor switching element, and outputs a divided voltage. A control circuit is operable to determine the full-charge voltage to be a high-temperature full-charge voltage by turning off the first semiconductor switching element when a temperature at the capacitor unit exceeds a reference temperature. The control circuit is operable to determine the full-charge voltage to be a low-temperature full-charge voltage that is higher than the high-temperature full-charge voltage by turning on the first semiconductor switching element when the detected temperature is not higher than the reference temperature.

Throughout the specification unless the context requires otherwise, the word "comprise" or variations such as "comprises" or "comprising", will be understood to imply the inclusion of a stated integer or group of integers but not the exclusion of any other integer or group of integers.

It is an object of the invention to provide a methodology in a controller for an appliance relying on batteries for its operation, that will avoid appliance failure and maximise battery life.

### Summary of Invention

In accordance with the invention there is provided a controller having a power supply including a battery for supplying power to said controller, said controller having an actuator circuit to actuate a device, where a processor powered from said battery controls said actuator circuit according to a schedule to actuate said actuator circuit; and said power supply including a storage capacitor; wherein said battery is connected via a charge circuit to selectively charge said storage capacitor, said storage capacitor being connected to said actuator circuit to selectively provide power from said storage capacitor to actuate said device, wherein when said actuator circuit is actuated said charge circuit is switched off, and when said actuator circuit is in stand-by (unactuated) said charge circuit is switched on; where said power supply includes voltage monitoring to monitor capacitor voltage; where said processor exerts over-riding control over actuation of said actuator circuit to prevent actuation of said device if the voltage of said capacitor does not reach and exceed a first predetermined level V₁ within a predetermined time T₁ after said charge circuit is again switched on after actuation of said device, said predetermined time being from 1.5 seconds to no more than 15 seconds.

The voltage monitoring may be most easily performed by the processor timing out the predetermined time from switch on of the charge circuit, where at the predetermined time, the capacitor voltage is measured via an A/D converter and compared with the stored level of V₁ to determine whether the capacitor voltage has reached or exceeded the first predetermined level.

Preferably said first predetermined level is from 50% to 70% of the rated battery voltage.

Preferably said first predetermined level is from 50% to 68% of the rated battery voltage.

Preferably said first predetermined level is from 50% to 65% of the rated battery voltage.

Preferably said first predetermined level is from 50% to 60% of the rated battery voltage.

Preferably said first predetermined level is about 55% of the rated battery voltage.

Alternatively, and more preferably said first predetermined level is from 50% to 70% of the actual battery voltage.

Alternatively, and more preferably said first predetermined level is from 50% to 68% of the actual battery voltage.

Alternatively, and more preferably said first predetermined level is from 50% to 65% of the actual battery voltage.

Alternatively, and more preferably said first predetermined level is from 50% to 60% of the actual battery voltage.

Alternatively, and more preferably said first predetermined level is about 55% of the actual battery voltage.

Preferably, said predetermined time is from 2 seconds.

Preferably, said predetermined time is from about 3 seconds.

Preferably, said predetermined time is from about 4 seconds.

Preferably, said predetermined time is from about 5 seconds.

Preferably if after said processor exerts over-riding control over actuation of said actuator circuit to prevent actuation of said device, the battery voltage fails to rise to and maintain a second predetermined level V₂ prior to said processor being scheduled to actuate said actuator circuit, said second predetermined level being greater than said first predetermined level, said processor releases said over-riding control, allowing actuation of said actuator circuit, where V₂ is greater than or equal to V₁.

Preferably said processor exerts over-riding control over actuation of said actuator circuit to prevent actuation of said device, if the battery voltage subsequently falls to fails to rise above said second predetermined level V₂.

Preferably said second predetermined level is from 55% to 75% of the rated battery voltage.

Preferably said second predetermined level is from 60% to 70% of the rated battery voltage.

Preferably said second predetermined level is from 65% to 68% of the rated battery voltage.

Preferably said second predetermined level is about 66% of the rated battery voltage.

Preferably said processor exerts over-riding control over actuation of said actuator circuit and issues a user observable notification to replace the battery, if the voltage across said capacitor falls below a third predetermined level immediately prior to said charge circuit being again switched on after actuation of said device, said third predetermined level being representative of a battery voltage V₃ less than said first predetermined level. The over-riding control in this arrangement would be expected to be continuing until a replacement battery is fitted. For ease of understanding V₃ < V₁ < V₂.

Preferably said third predetermined level is representative of a battery voltage from 40% to 55% of the rated battery voltage.

Preferably said third predetermined level is representative of a battery voltage from 42% to 50% of the rated battery voltage.

Preferably said third predetermined level is representative of a battery voltage from 43% to 47% of the rated battery voltage.

Preferably said third predetermined level is representative of a battery voltage of about 44% of the rated battery voltage.

The third predetermined level is a battery voltage level below which it is considered that the battery could not recover sufficiently and consequently the device would fail to actuate. The first predetermined level and the predetermined time depend on the battery voltage for the battery, the internal impedance of the charge circuit and the size of the capacitor. Typically the predetermined period would be in the order of two to three seconds for a good battery with a maximum period of five to ten seconds likely to be required as a battery ages. The second predetermined level is the minimium voltage level at which the device would be able to be actuated in the future at least two more times.

In its simplest form monitoring of the battery voltage and the capacitor voltage can be achieved by monitoring the capacitor voltage only, since the capacitor voltage lags the battery voltage due to the internal impedance of the charge circuit, but as time passes beyond the first predetermined period, the actual battery voltage and the capacitor voltage will get closer, less any forward voltage drop across the charge circuit.

Preferably said processor maintains a table of previous values for successive measured predetermined periods, and exerts over-riding control over actuation of said actuator circuit and issues a user observable notification to replace the battery, if the most recent measured predetermined period exceeds any previously stored measured predetermined period by more than 20%. Times of more than 10%, 11%, 12%, 13%, 14%, 15%, 16%, 17%, 18%, or 19% may be contemplated, but a variation of 9% would be considered to fall within the realms of a temperature induced variation.

Preferably the charge circuit is arranged to selectively supply power to the capacitor at a first rate for charging the capacitor when said charge circuit is switched on, and at a second current limited rate when said charge circuit is switched off to allow monitoring of battery current and voltage level V₃ at the highest demand stage when the capacitor is discharged, prior to again switching on said charge circuit. This allows battery voltage across a known load to be determined, to derive an indication of battery condition.

Preferably said actuator circuit is provided in the form of an H-bridge circuit, where the device is actuated to an on-condition by supplying power in one polarity and the device is actuated to an off-condition by supplying power in the opposite polarity.

Preferably said processor is arranged to not exert over-riding control over said actuator circuit to actuate said device to the off-condition after having previously actuated said device to an on-condition. In other words, preferably said processor will only exert over-riding control over actuation of said actuator circuit where the device is already actuated to an off-condition. In this way, the controller will not prevent operation to switch the device to an off-condition after having switched it on, in circumstances where it might perceive there might not be sufficient battery power. This is a fail-safe feature to avoid the device being left stranded in an on-condition.

Also in accordance with the invention there is provided a tap timer incorporating a controller as described above, where the device is a valve actuator for a valve which in a first operation is actuated to turn the valve on, and in a second operation is actuated to turn the valve off. The controller of the invention has an added advantage in this application, where in prior art tap timers the valve actuator is electric-motor driven, and at either end of the travel, the electric motor presents as a short circuit, draining the battery until the controller switches off the power to the electric motor, and shortening the battery life. In the present invention the storage capacitor is used to drive the electric motor, not the battery.

### Brief Description of Drawings

A preferred embodiment of the invention will now be described with reference to the drawings is which:
Figure 1 is a block circuit schematic of a control circuit for a tap timer according the embodiment; and
Figure 2 is a circuit diagram for a control circuit for a tap timer according to the embodiment.

### Description of Embodiments

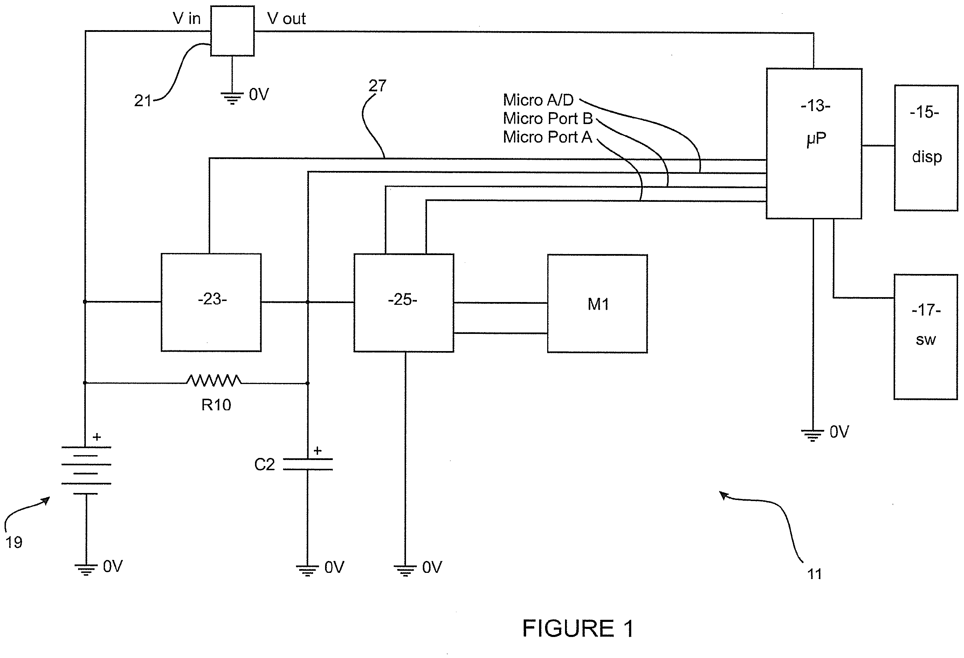

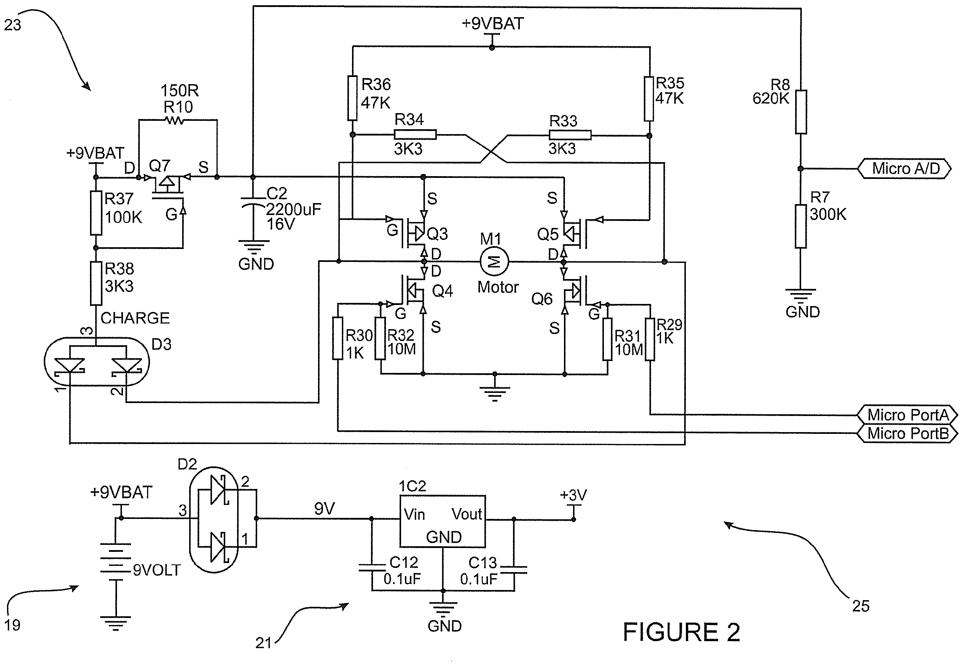

The embodiment is a controller for a tap timer and is shown in figures 1 and 2.

Referring to figure 1 the control circuit for a tap timer 11 is shown in block diagram form. The tap timer 11 has a microprocessor 13 with a display 15 so the user can observe its status, and input switches 17 so the user can input a time schedule and also manually operate the tap timer 11.

The tap timer 11 has a 9 volt battery 19 and a voltage regulator 21 to provide the regulated 3 volt power supply required by the microprocessor 13. The power supply of the invention is formed by a charge circuit 23, a capacitor C2, a bypass resistor R10, and the battery 19.

The tap timer 11 has an electrically operated valve M1, connected with an actuator circuit 25. The actuator circuit 25 is controlled by a high from microprocessor 13 on outputs Micro PortA and Micro PortB. Voltage of the capacitor C2 is monitored by the microprocessor analog to digital input Micro A/D. Control output 27 is shown to switch charge circuit 23, but in practice this may be derived from a logic NOR of outputs Micro PortA and Micro PortB, or other means as will be apparent from figure 2. The required logic is that if outputs Micro PortA and Micro PortB are low, the charge circuit 23 will switch on to charge the capacitor C2, but otherwise the current path from the battery 19 to capacitor C2 is via resistor R10.

The embodiment of the invention provides a low cost method of voltage detection and then a process for monitoring of the battery energy as the battery discharged into a load. This method is provided in software as an algorithm, allowing it to be used in very simple microprocessors.

The method of monitoring the discharge rate is based on the charging and discharging of capacitor C2. The capacitor C2 is used as the storage mechanism for delivering of the energy required to open and then close the valve, and the method involves measuring of the energy used to charge this capacitor.

In the schematic shown in Figure 2, C2 is a 2,200uF capacitor is used as a storage capacitor to hold the charge required by M1 to either fully open or fully close the tap timer valve (i.e. to fully actuate or fully deactuate the tap timer valve).

This charge is fed to the motor or solenoid via the actuator circuit 25 formed by an "H" bridge as a short high energy pulse with a controlled pulse time width and duration. The H bridge is formed by FETs Q3, Q4, Q5 and Q6, and their associated components.

The timing of the delivery of the charge is controlled according to a time schedule that is pre-programmed into the tap timer 11 by the user, or may be through manual on/off commands entered into the tap timer 11 by the user. The tap timer 11 valve is driven by a motor M1, with the motor being run in a first direction to open the valve and in the reverse direction to close the valve.

Due to the construction of the "H" bridge it is possible to control the polarity of the charge supplied to M1 via the two microprocessor pins marked Micro PortA and Micro PortB. The motor is run in the first direction switched via FETs Q6 and Q3 when their gates are energised by application of a voltage at Micro PortA by the microprocessor, and run in the second direction switched via FETs Q4 and Q5 when their gates are energised by application of a voltage at Micro PortB by the microprocessor. A high on either of these ports will cause the current to flow in one or the other direction, and when both ports are off the "h" bridge becomes fully disconnected.

A third microprocessor pin is also used and this is attached to the microprocessor via an A/D (if one is available) or through a comparator with a charge timer delta A/D mechanism (if it is not.)

When Micro PortA and Micro PortB are at rest, that is they are both low, then TP3 on Q7 is high. This means Q7 conducts current from the 9 volt block battery to C2. This state only occurs when the "H" bridge is in the rest condition.

The A/D reading is taken of this rest position and this value becomes the no load voltage of the battery. This reading is regularly checked (once per hour) and should it drop below a second predetermined level V₂ of about two thirds of the rated battery voltage (6.2 volts for a 9 volt block alkaline battery) then the microprocessor over-rides the operation of output Micro PortA, effectively shutting down the tap timer 11 so that no start is allowed; that is to say, the switching of FETs Q6 and Q3 is over-ridden so that the motor will not be run in the first direction to actuate the tap timer. However, if the motor has already been run in the first direction, and the battery voltage is subsequently checked and found to be below 6.2 volts, the processor will not over-ride operation of Micro PortB and the FETs Q4 and Q5, allowing the motor to run in the second direction in order to fully close off the valve and thereby de-actuate the tap timer and shut off the watering. In this manner, the tap timer will not be left in a compromised condition where the valve is left open.

Should this no load voltage increase at a later time to rise above 6.2 volts, due to battery recovery or environmental conditions then the micro-processor release the over-riding control over Micro PortA, and again the tap timer 11 is allowed to open (and shut) the valve.

The rate of charge of the capacitor C2 can also be determined using the above mechanism, and this also allows the maximum droop that the battery suffers when it is charging the capacitor C2 to be measured. This is achieved by knowing the "No Load Voltage" and then by collecting the voltage when the battery is put under a known load.

The measuring of the battery voltage when the battery is out under a known load takes place when the tap timer actuator circuit 25 is actuated to open or close the valve. In this situation a series of values that represent the fully charged position of the capacitor C2 to the fully discharged position can be measured and stored in memory in the microprocessor. This occurs as the motor M1 consumes the stored power in capacitor C2. Once all the current has been used from C2 another measurement is taken which gives the voltage value through the now stalled motor and the current drop across R10. With this data, information unique to the battery that is in use is calculated.

Voltage curve data is updated on each open and close of the valve that details the droop from steady state to full loaded. If the full loaded voltage falls to a level representative of a battery voltage under load of below 4 volts (being the third predetermined level V₃ described above) the microprocessor considers the battery to be too risky to keep in use, the tap timer is shut it down, and a flat battery indicator is activated in the display 15.

At full load the voltage will drop and as the load is released and the battery begins to charge, the time taken for the battery voltage level to reach 55% of the no load voltage is measured. This time is stored in a table and should the latest time exceed the previous stored time by more than 20 % or the time taken to reach 55% of the no load voltage exceed 10 seconds, the microprocessor operates to exert over-riding control over operation of the tap timer.

Should the steady state of this particular battery improve over time to reach the second predetermined level V2, then the microprocessor will release over-riding control and again allow the tap timer to open and close the valve again.

As discussed, the current curve data for the battery, is derived by collecting data as the capacitor is recharged via the FET Q7. As the exact internal resistance of the FET Q7 when on is known, and the differential voltage across the FET Q7 is known (ie comparing the steady state voltage V₂ when the capacitor is charged and the voltage as Q7 allows current to pass and charge C2), from this information the amp hours left in the battery can be approximated and it can be predicted by observing increasing predetermined time periods T₁ at what point the battery might fail. This prediction point plus a small amount to allow for error is used as the set point for the microprocessor to inhibit any further opening or closing of the valve.

With this technique, the life of the battery is now maximised and every time the tap timer is opened or closed, the trip point based on ΔT₁ is recalculated and redefined. This means the only time the tap timer stops completely is when there is no chance that the battery might recover or have any further charge above what is required to open and close the valve.

The unique properties of this mechanism is that it can fully realise and calculate the life expectancy of an attached battery regardless of the battery chemistry and it can determine a line of best fit for long term operation that is updated regularly as the battery comes under load. This type of mechanism is cheap easily realisable on the simplest microprocessor and provides the best use of limited resource batteries.

In effect the capacitor value is selected so that at a minimum voltage there will be sufficient stored charge to perform the actuation or deactuation of the valve. Various parameters as described above are monitored in order to make a determination as to whether the tap timer is fit for continued operation, especially after the most recent deactuation, or whether the battery should be replaced.

The following table sets out the semiconductor devices used in the circuit diagram of figure 2:

| | | |
|---|---|---|
| Q3 | IRLM6402 | P-Channel FET |
| Q4 | IRLM2030 | N-Channel FET |
| Q5 | IRLM6402 | P-Channel FET |
| Q6 | IRLM2030 | N-Channel FET |
| Q7 | IRLM6402 | P-Channel FET |
| IC2 | MCP1702 | Voltage Regulator |
| D2 | BAT54ALT | Schottky Barrier Diodes |
| D3 | BAT54ALT | Schottky Barrier Diodes |

It should be appreciated that the scope of the invention is not limited to the particular embodiment described herein. In particular the control circuit of the invention may be used in any battery powered appliance or other appliance having a power supply with limited current capacity, where current draw to actuate or to deactuate the appliance is higher than the standby current.

## Claims

1. A controller (11) having a power supply including a battery (19) for supplying power to said controller (11), said controller (11) having an actuator circuit (25) to actuate a device (M1), where a processor (13) powered from said battery (19) controls said actuator circuit (25) according to a schedule to actuate said actuator circuit (25); and said power supply including a storage capacitor (C2) and a voltage monitoring (35) to monitor capacitor (C2) voltage;
wherein said battery (19) is connected via a charge circuit (23) to selectively charge said storage capacitor (C2), said storage capacitor (C2) being connected to said actuator circuit (25) to selectively provide power from said storage capacitor (C2) to actuate said device (M1),
**characterised in that** when said actuator circuit (25) is actuated said charge circuit (23) is switched off, and when said actuator circuit (25) is in stand-by, said charge circuit (23) is switched on; where said processor (13) exerts over-riding control over actuation of said actuator circuit (25) to prevent actuation of said device if the voltage of said capacitor (C2) does not reach and exceed a first predetermined level V₁ of from 50% of the rated battery (19) voltage within a predetermined time T₁ after said charge circuit (23) is again switched on after actuation of said device (M1), said predetermined time being from 1.5 seconds to no more than 15 seconds.

2. A controller (11) as claimed in claim 1 wherein the voltage monitoring (Micro A/D) is performed by the processor (13) timing out the predetermined time from switch on of the charge circuit (23), where at the predetermined time, the capacitor (C2) voltage is measured via an analog to digital converter and compared with the stored first predetermined level of V₁ to determine whether the capacitor (C2) voltage has reached or exceeded the first predetermined level.

3. A controller (11) as claimed in claim 1 or 2 wherein said first predetermined level is from 50% to 70% of the rated battery (19) voltage.

4. A controller (11) as claimed in claim 1 or 2 wherein said first predetermined level is from 50% to 70% of the actual battery (19) voltage.

5. A controller (11) as claimed in any one of the preceding claims, wherein if after said processor (13) exerts over-riding control over actuation of said actuator circuit (25) to prevent actuation of said device, the battery (19) voltage fails to rise to and maintain a second predetermined level V₂ prior to said processor (13) being scheduled to actuate said actuator circuit (25), said second predetermined level being greater than said first predetermined level, said processor (13) releases said over-riding control, allowing actuation of said actuator circuit (25), where V₂ is greater than or equal to V₁.

6. A controller (11) as claimed in claim 5 wherein said processor (13) exerts over-riding control over actuation of said actuator circuit (25) to prevent actuation of said device, if the battery (19) voltage subsequently falls to fails to rise above said second predetermined level V₂.

7. A controller (11) as claimed in claim 5 or 6 wherein said second predetermined level is from 55% to 75% of the rated battery (19) voltage.

8. A controller (11) as claimed in any one of claims 5 to 7 wherein said processor (13) exerts over-riding control over actuation of said actuator circuit (25) and issues a user observable notification to replace the battery (19), if the voltage across said capacitor (C2) falls below a third predetermined level immediately prior to said charge circuit (23) being again switched on after actuation of said device (M1), said third predetermined level being representative of a battery voltage V₃ less than said first predetermined level.

9. A controller (11) as claimed in claim 8 wherein said third predetermined level is representative of a battery (19) voltage from 40% to 55% of the rated battery voltage.

10. A controller (11) as claimed in any one of the preceding claims, wherein said processor (13) maintains a table of previous values for successive measured predetermined periods, and exerts over-riding control over actuation of said actuator circuit (25) and issues a user observable notification to replace the battery (19), if the most recent measured predetermined period exceeds any previously stored measured predetermined period by more than 20%.

11. A controller (11) as claimed in any one of claims 1 to 9, wherein said processor (13) maintains a table of previous values for successive measured predetermined periods, and exerts over-riding control over actuation of said actuator circuit (25) and issues a user observable notification to replace the battery (19), if the most recent measured predetermined period exceeds any previously stored measured predetermined period by more than 15%.

12. A controller (11) as claimed in any one of the preceding claims, wherein the charge circuit (23) is arranged to selectively supply power to the capacitor (C2) at a first rate for charging the capacitor when said charge circuit (23) is switched on, and at a second current limited rate (R10) when said charge circuit (23) is switched off to allow monitoring of battery (19) current and voltage level V₃ at the highest demand stage when the capacitor (C2) is discharged, prior to again switching on said charge circuit (23).

13. A controller (11) as claimed in any one of the preceding claims, wherein said actuator circuit (25) is provided in the form of an H-bridge circuit (Q3, Q4, Q5, Q6), where the device (M1) is actuated to an on-condition by supplying power in one polarity and the device (M1) is actuated to an off-condition by supplying power in the opposite polarity.

14. A controller (11) as claimed in any one of the preceding claims, wherein said processor (13) is arranged to not exert over-riding control over said actuator circuit (25) to actuate said device (M1) to the off-condition after having previously actuated said device (M1) to an on-condition.

15. A tap timer incorporating a controller (11) as claimed in any one of the preceding claims, where the device (M1) is a valve actuator for a valve which in a first operation is actuated to turn the valve on, and in a second operation is actuated to turn the valve off.

## Patentansprüche

1. Steuervorrichtung (11) mit einer Leistungsversorgung, die eine Batterie (19) zum Versorgen der Steuervorrichtung (11) mit Leistung enthält, wobei die Steuervorrichtung (11) eine Aktorschaltung (25) zum Ansteuern eines Geräts (M1) aufweist, wobei ein von der Batterie (19) angetriebener Prozessor (13) die Aktorschaltung (25) gemäß einem Plan zum Ansteuern der Aktorschaltung (25) steuert; und wobei die Leistungsversorgung einen Speicherkondensator (C2) und eine Spannungsüberwachung (35) zum Überwachen der Kondensatorspannung (C2) enthält;
wobei die Batterie (19) über eine Lastschaltung (23) zum selektiven Laden des Speicherkondensators (C2) angeschlossen ist, wobei der Speicherkondensator (C2) an die Aktorschaltung (25) zum selektiven Bereitstellen von Leistung von dem Speicherkondensator (C2) zum Ansteuern des Geräts (M1) angeschlossen ist,
**dadurch gekennzeichnet, dass**, wenn die Aktorschaltung (25) angesteuert ist, die Lastschaltung (23) abgeschaltet ist und wenn die Aktorschaltung (25) im Stand-By ist, die Lastschaltung (23) eingeschaltet ist; wobei der Prozessor (13) eine übergeordnete Steuerung über das Ansteuern der Aktorschaltung (25) ausübt, um ein Ansteuern des Geräts zu verhindern, wenn die Spannung des Kondensators (C2) ein erstes vorbestimmtes Niveau V₁ von 50 % der Nennspannung der Batterie (19) innerhalb einer vorbestimmten Zeit T₁ nicht erreicht und übersteigt, nachdem die Lastschaltung (23) erneut nach dem Ansteuern des Geräts (M1) eingeschaltet ist, wobei die vorbestimmte Zeit von 1,5 Sekunden bis höchstens 15 Sekunden dauert.

2. Steuervorrichtung (11) nach Anspruch 1, wobei die Spannungsüberwachung (Mikro A/D) durch den Prozessor (13) durchgeführt ist, der die Zeitbegrenzung der vorbestimmten Zeit vom Schalter auf der Lastschaltung (23) auslöst, wobei die Kondensatorspannung (C2) in der vorbestimmten Zeit über einen Analog-Digital-Wandler gemessen ist und mit dem gespeicherten ersten vorbestimmten Niveau von V₁ gemessen ist, um zu bestimmen, ob die Kondensatorspannung (C2) das erste vorbestimmte Niveau erreicht oder überschritten hat.

3. Steuervorrichtung (11) nach Anspruch 1 oder 2, wobei das erste vorbestimmte Niveau 50 % bis 70 % der Nennspannung der Batterie (19) beträgt.

4. Steuervorrichtung (11) nach Anspruch 1 oder 2, wobei das erste vorbestimmte Niveau 50 % bis 70 % der Ist-Spannung der Batterie (19) beträgt.

5. Steuervorrichtung (11) nach irgendeinem der voranstehenden Ansprüche, wobei die Batteriespannung (19) ein zweites vorbestimmtes Niveau V₂ nicht erhöht und auf diesem Niveau hält, bevor der Prozessor (13) planmäßig die Aktorschaltung (25) ansteuert, nachdem der Prozessor (13) eine übergeordnete Steuerung über das Ansteuern der Aktorschaltung (25) ausübt, um das Ansteuern des Geräts zu verhindern, wobei das zweite vorbestimmte Niveau größer ist als das erste vorbestimmte Niveau, wobei der Prozessor (13) die übergeordnete Steuerung freigibt und damit das Ansteuern der Aktorschaltung (25) ermöglicht, wobei V₂ größer ist als oder gleich V₁.

6. Steuervorrichtung (11) nach Anspruch 5, wobei der Prozessor (13) eine übergeordnete Steuerung über das Ansteuern der Aktorschaltung (25) ausübt, um das Ansteuern das Geräts zu verhindern, wenn die Batteriespannung (19) anschließend nicht über das zweite vorbestimmte Niveau V₂ steigt.

7. Steuervorrichtung (11) nach Anspruch 5 oder 6, wobei das zweite vorbestimmte Niveau 55 % bis 75 % der Nennspannung der Batterie (19) beträgt.

8. Steuervorrichtung (11) nach irgendeinem der Ansprüche 5 bis 7, wobei der Prozessor (13) eine übergeordnete Steuerung über das Ansteuern der Aktorschaltung (25) ausübt und eine beobachtbare Nutzerbenachrichtigung ausgibt, um die Batterie (19) zu ersetzen, wenn die Spannung in dem gesamten Kondensator (C2) unverzüglich, bevor die Lastschaltung (23) nach dem Ansteuern des Geräts (M1) erneut eingeschaltet ist unter ein drittes vorbestimmtes Niveau fällt, wobei das dritte vorbestimmte Niveau eine Batteriespannung V₃ darstellt, die niedriger ist als das erste vorbestimmte Niveau.

9. Steuervorrichtung (11) nach Anspruch 8, wobei das dritte vorbestimmte Niveau eine Batteriespannung (19) von 40 % bis 55 % der Nennspannung der Batterie darstellt.

10. Steuervorrichtung (11) nach irgendeinem der voranstehenden Ansprüche, wobei der Prozessor (13) eine Tabelle früherer Werte für sukzessive gemessene vorbestimmte Perioden führt und eine übergeordnete Steuerung über das Ansteuern der Aktorschaltung (25) ausübt und eine beobachtbare Nutzerbenachrichtigung ausgibt, um die Batterie (19) zu ersetzen, wenn die aktuellste gemessene vorbestimmte Periode irgendeine zuvor gespeicherte gemessene vorbestimmte Periode um mehr als 20 % übersteigt.

11. Steuervorrichtung (11) nach irgendeinem der Ansprüche 1 bis 9, wobei der Prozessor (13) eine Tabelle früherer Werte für sukzessive gemessene vorbestimmte Perioden führt und eine übergeordnete Steuerung über das Ansteuern der Aktorschaltung (25) ausübt und eine beobachtbare Nutzerbenachrichtigung ausgibt, um die Batterie (19) zu ersetzen, wenn die aktuellste gemessene vorbestimmte Periode irgendeine zuvor gespeicherte gemessene vorbestimmte Periode um mehr als 15 % übersteigt.

12. Steuervorrichtung (11) nach irgendeinem der voranstehenden Ansprüche, wobei die Lastschaltung (23) angeordnet ist, um den Kondensator (C2), wenn die Lastschaltung (23) eingeschaltet ist, und in einer zweiten begrenzten Stromfrequenz (R10), wenn die Lastschaltung (23) abgeschaltet ist, um die Überwachung des Batteriestroms (19) und des Spannungsniveaus V₃ in der höchsten Bedarfsphase zu ermöglichen, wenn der Kondensator (C2) entladen ist, bevor die Lastschaltung (23) erneut eingeschaltet ist, selektiv in einer Frequenz mit Leistung zum Laden des Kondensators zu versorgen.

13. Steuervorrichtung (11) nach irgendeinem der voranstehenden Ansprüche, wobei die Aktorschaltung (25) in der Form einer H-Brückenschaltung (Q3, Q4, Q5, Q6) bereitgestellt ist, wobei das Gerät (M1) in einen Ein-Zustand durch Versorgen mit Leistung in einer Polarität angesteuert ist und das Gerät (M1) in einen Aus-Zustand durch Versorgen mit Leistung in der umgekehrten Polarität angesteuert ist.

14. Steuervorrichtung (11) nach irgendeinem der voranstehenden Ansprüche, wobei der Prozessor (13) angeordnet ist, um keine übergeordnete Steuerung über die Aktorschaltung (25) auszuüben, um das Gerät (M1) in den Aus-Zustand anzusteuern, nachdem zuvor das Gerät (M1) in einen Ein-Zustand angesteuert wurde.

15. Eine Steuervorrichtung (11) beinhaltender Stufen-Zeitgeber nach irgendeinem der voranstehenden Ansprüche, wobei das Gerät (M1) ein Betätigungsventil für ein Ventil ist, das in einem ersten Betrieb angesteuert ist, um das Ventil einzuschalten und in einem zweiten Betrieb angesteuert ist, um das Ventil abzuschalten.

## Revendications

1. Contrôleur (11) ayant une alimentation électrique comprenant une batterie (19) pour alimenter ledit contrôleur (11), ledit contrôleur (11) ayant un circuit d'actionneur (25) pour actionner un dispositif (M1), dans lequel un processeur (13) alimenté à partir de ladite batterie (19) commande ledit circuit d'actionneur (25) selon une planification pour actionner ledit circuit d'actionneur (25) ;
et ladite alimentation électrique comprenant un condensateur de stockage (C2) et une surveillance de la tension (35) pour surveiller la tension de condensateur (C2) ;
dans lequel ladite batterie (19) est connectée via un circuit de charge (23) pour charger de manière sélective ledit condensateur de stockage (C2), ledit condensateur de stockage (C2) étant connecté audit circuit d'actionneur (25) pour alimenter de manière sélective ledit condensateur de stockage (C2) pour actionner ledit dispositif (M1),
**caractérisé en ce que** lorsque ledit circuit d'actionneur (25) est actionné, ledit circuit de charge (23) est mis hors tension, et lorsque ledit circuit d'actionneur (25) est en veille, ledit circuit de charge (23) est mis sous tension ; dans lequel ledit processeur (13) exerce une commande de surcharge sur l'actionnement dudit circuit d'actionneur (25) pour empêcher l'actionnement dudit dispositif si la tension dudit condensateur (C2) n'atteint pas et dépasse un premier niveau prédéterminé V₁ de 50% de la tension de la batterie nominale (19) dans un temps prédéterminé T1 après que ledit circuit de charge (23) est à nouveau mis sous tension après l'actionnement dudit dispositif (M1), ledit temps prédéterminé étant de 1,5 seconde à pas plus de 15 secondes.

2. Contrôleur (11) selon la revendication 1, dans lequel la surveillance de la tension (micro A/D) est effectuée par le processeur (13) chronométrant le temps prédéterminé à partir de la mise sous tension du circuit de charge (23), dans lequel à un temps prédéterminé, la tension de condensateur (C2) est mesurée via un convertisseur analogique au numérique et comparée au premier niveau prédéterminé de V₁ stocké pour déterminer si la tension de condensateur (C2) a atteint ou dépassé le premier niveau prédéterminé.

3. Contrôleur (11) selon la revendication 1 ou 2, dans lequel ledit premier niveau prédéterminé est de 50% à 70% de la tension nominale de la batterie (19).

4. Contrôleur (11) selon la revendication 1 ou 2, dans lequel ledit premier niveau prédéterminé est de 50% à 70% de la tension réelle de la batterie (19).

5. Contrôleur (11) selon l'une quelconque des revendications précédentes, dans lequel, si après que ledit processeur (13) exerce une commande de surcharge sur l'actionnement dudit circuit d'actionneur (25) pour empêcher l'actionnement dudit dispositif, la tension de la batterie (19) ne parvient pas à s'élever et à se maintenir à un deuxième niveau prédéterminé V₂ avant ledit processeur (13) qui est programmé pour actionner ledit circuit d'actionneur (25), ledit deuxième niveau prédéterminé étant supérieur audit premier niveau prédéterminé, ledit processeur (13) libère la commande de surcharge, permettant l'actionnement dudit circuit d'actionneur (25), où V₂ est supérieur ou égal à V₁.

6. Contrôleur (11) selon la revendication 5, dans lequel ledit processeur (13) exerce une commande de surcharge sur l'actionnement dudit circuit d'actionneur (25) pour empêcher l'actionnement dudit dispositif, si la tension de la batterie (19) tombe par la suite pour ne pas parvenir à monter au-dessus dudit deuxième niveau prédéterminé V₂.

7. Contrôleur (11) selon la revendication 5 ou 6, dans lequel ledit deuxième niveau prédéterminé est compris entre 55% et 75% de la tension nominale de la batterie (19).

8. Contrôleur (11) selon l'une quelconque des revendications 5 à 7, dans lequel ledit processeur (13) exerce une commande de surcharge sur l'actionnement dudit circuit d'actionneur (25) et émet une notification observable de l'utilisateur pour remplacer la batterie (19), si la tension dans ledit condensateur (C2) tombe en dessous d'un troisième niveau prédéterminé immédiatement avant ledit circuit de charge (23) qui est à nouveau mis sous tension après l'actionnement dudit dispositif (M1), ledit troisième niveau prédéterminé étant représentatif d'une tension de batterie V₃ inférieur audit premier niveau prédéterminé.

9. Contrôleur (11) selon la revendication 8, dans lequel ledit troisième niveau prédéterminé est représentatif d'une tension de batterie (19) allant de 40% à 55% de la tension nominale de la batterie.

10. Contrôleur (11) selon l'une quelconque des revendications précédentes, dans lequel ledit processeur (13) maintient un tableau des valeurs précédentes pour des périodes prédéterminées mesurées successives et exerce une commande de surcharge sur un actionnement dudit circuit d'actionneur (25) et émet une notification observable de l'utilisateur pour remplacer la batterie (19) si la période prédéterminée la plus récente mesurée dépasse une période prédéterminée mesurée précédemment stockée de plus de 20%.

11. Contrôleur (11) selon l'une quelconque des revendications 1 à 9, dans lequel ledit processeur (13) maintient un tableau des valeurs précédentes pour des périodes prédéterminées mesurées successives et exerce une commande de surcharge lors de l'actionnement dudit circuit d'actionneur (25) et émet une notification observable de l'utilisateur pour remplacer la batterie (19), si la période prédéterminée mesurée la plus récente dépasse toute période prédéterminée mesurée précédemment stockée de plus de 15%.

12. Contrôleur (11) selon l'une quelconque des revendications précédentes, dans lequel le circuit de charge (23) est agencé pour alimenter de manière sélective l'alimentation du condensateur (C2) à une première fréquence pour charger le condensateur lorsque ledit circuit de charge (23) est mis sous tension et à une deuxième fréquence limitée de courant (R10) lorsque ledit circuit de charge (23) est mis hors tension pour permettre la surveillance du niveau de courant et de la tension V₃ de la batterie (19) au stade de la demande la plus élevée lorsque le condensateur (C2) est déchargé, avant la remise sous tension dudit circuit de charge (23).

13. Contrôleur (11) selon l'une quelconque des revendications précédentes, dans lequel ledit circuit d'actionneur (25) est fourni sous la forme d'un circuit de pont en H (Q3, Q4, Q5, Q6), dans lequel le dispositif (M1) est actionné dans un état activé en fournissant du courant dans une polarité et le dispositif (M1) est actionné à un état désactivé en fournissant du courant dans la polarité opposée.

14. Contrôleur (11) selon l'une quelconque des revendications précédentes, dans lequel ledit processeur (13) est agencé pour ne pas exercer une commande de surcharge sur ledit circuit d'actionneur (25) pour actionner ledit dispositif (M1) dans un état désactivé après avoir déjà actionné ledit dispositif (M1) dans un état activé.

15. Minuterie de robinet incorporant un contrôleur (11) selon l'une quelconque des revendications précédentes, dans lequel le dispositif (M1) est un actionneur de vanne pour une vanne qui, dans une première opération, est actionnée pour ouvrir la vanne, et dans une deuxième opération est actionnée pour fermer la vanne.
